# EUROPEAN PATENT SPECIFICATION

(11) **EP 1 845 239 B1**
(45) Date of publication and mention of the grant of the patent: **18.04.2012**
(21) Application number: 05795567.6
(22) Date of filing: 24.10.2005
(51) Int. Cl.: F01P 7/16, F16K 31/68

(54) **THERMOSTAT DEVICE**
THERMOSTATVORRICHTUNG
DISPOSITIF À THERMOSTAT

(30) Priority: 31.01.2005 JP 2005022348
(43) Date of publication of application: 17.10.2007
(73) Proprietor: Nippon Thermostat Co., Ltd., Kiyose-shi, Tokyo 204-0003 (JP)
(72) Inventor: KIMIJIMA, Kenji, NIPPON THERMOSTAT CO., LTD, Kiyose-shi, Tokyo 204-0003 (JP); YAJIMA, Noriyasu, NIPPON THERMOSTAT CO., LTD, Kiyose-shi, Tokyo 204-0003 (JP)
(74) Representative: Jannig, Peter
(86) International application number: PCT/JP2005/019467
(87) International publication number: WO 2006/080117

(56) References cited:
- EP-A- 0 985 808
- JP-A- 4 321 712
- JP-A- 11 093 666
- JP-U- 3 030 526
- JP-U- 57 028 961
- JP-U- 60 023 368
- JP-U- 61 028 962
- JP-U- 61 028 964
- JP-U- 63 012 629
- US-B1- 6 260 515

## Description

### TECHNICAL FIELD

The present invention relates to a thermostat device which is a temperature sensitive automatic valve that is used for controlling cooling water temperature by switching the flow of engine cooling water through operation in response to fluctuations in the temperature of the cooling water in an engine cooling water circuit that circulates cooling water between a heat exchanger (hereafter referred to as a "radiator") and an internal combustion engine (hereafter referred to as an "engine") used for example in an automobile or similar.

### BACKGROUND ART

In an automobile engine, normally a water cooled type cooling system with a radiator is used to cool the engine. In conventional cooling systems of this type, a thermostat using a thermally expanding material or an electrically controlled valve unit are used to adjust the flow rate of cooling water circulating on the radiator side, to control the temperature of cooling water introduced into the engine.

In other words, a control valve consisting of a thermostat using a thermally expanding material or an electrically controlled valve unit is inserted into a part of the cooling water path, for example the engine inlet side or the engine outlet side, and when the temperature of the cooling water is low, the control valve is closed so that cooling water is circulated via a bypass path not via the radiator, and when the temperature of the cooling water becomes high, the control valve is opened so cooling water is circulated through the radiator, so that the temperature of the engine cooling water can be controlled to be in the required state.

However, in this type of thermostat unit, a jiggle valve is provided in parallel with the on-off valve that constitutes the thermostat unit, to remove air that is trapped in the cooling water path at the time the cooling water is poured in. The jiggle valve is configured to open and close an air bleed path and is provided on an installation flange of the on-off valve. Also, when the engine is running the jiggle valve is closed by water pressure, to eliminate cooling water leakage from the engine to the radiator, to prevent unnecessary radiation of heat, and to shorten the warm up time.

The valve body of this type of jiggle valve includes a valve body portion whose diameter is larger than the air bleed path, a rod portion inserted into the path, and a retaining head portion at the end of the rod portion for retention, also conventionally the valve body is formed from a synthetic resin. Also, oscillations and other movements due to the effect of the water pressure or flow of the cooling water within the cooling water path are induced in the jiggle valve body, so to maintain the valve in a closed condition measures are taken such as forming a large diameter hole at the valve seat of the hole that forms the air bleed path, or forming a taper on the edge of the aperture, and so on (for example, see Japanese Utility Model Application Laid-open No. S61-28962, or Japanese Utility Model Application Laid-open No. S61-28964).

However, jiggle valves used in conventional thermostat devices as described above had the following problems.

In other words, the valve body of the conventional jiggle valve described above has a large diameter valve body and a retaining head portion at either end of the rod portion inserted in the air bleed path, so the work to install these is difficult and complicated.

For example, if the retaining head portion is formed as a separate part, and after inserting the rod portion into the air bleed path the head portion is assembled at both ends of the rod portion the operability is improved, but it is necessary to securely fix the parts to prevent them from falling out, or similar.

Also, the valve body is formed from a synthetic resin material, so the valve body is light, and when cooling water is passing through the cooling water path the valve body can move easily, so problems such as valve closure of the air bleed path have occurred.

Furthermore, when the valve body is formed from synthetic resin, during forming shrinkage occurs, so the shape is deformed, and when the valve is closed problems such as sealing defects and the like have occurred.

A further thermostat device is known from document EP-A-0 985 808. The thermostat device described therein does, however not satisfactorily solve all of the problems mentioned above.

### DISCLOSURE OF THE INVENTION

With the foregoing in view, it is an object of the present invention is to provide a thermostat device for which the forming process and the assembly operations of the valve body of the jiggle valve can be simply carried out, for which movement of the valve body of the jiggle valve due to the water pressure or flow of the cooling water can be prevented, and for which stable opening and closing operation of the air bleed path can be obtained.

In response to these objects, a thermostat device according to the present invention (invention according to claim 1) is provided in the cooling water circuit of an internal combustion engine, having a piston rod that slides in accordance with the thermal expansion and contraction of a thermally expanding material due to temperature fluctuations in the cooling water, an on-off valve whose valve body is opened and closed by the sliding of the piston rod caused by the volumetric changes in the thermally expanding material, and a jiggle valve that opens and closes an air bleed path provided in the installation flange of the on-off valve, the jiggle valve being provided in parallel with the on-off valve and having a valve body that closes the air bleed path under the water pressure of the cooling water, wherein the valve body of the jiggle valve is formed in a cylindrical shape made from an elastic material whose diameter is larger than the air bleed path, wherein the jiggle valve further comprises a rod portion to be inserted into the air bleed path, and a retaining head portion provided on the end of the rod portion, wherein a cutout portion is formed in a part of the periphery in the axial direction of the cylindrical shaped valve body, said cutout portion being a step portion whose diameter is smaller than that of the periphery, and wherein the rod portion and the retaining head portion are formed integrally from an elastic material with the valve body of the jiggle valve, and a dividing slot is formed from tip of the retaining head portion along the axial direction.

Here "step portion" is for example a cut out portion obtained by forming a depression uniformly in the circumferential direction in the periphery of the valve body over part of the axial direction, and the cross-sectional shape of the cut out portion may be for example a cross-shaped cross-section, a prismatic shape, a cylindrical shape, or another suitable shape.

According to claim2, a tapered surface may be formed by carrying out a chamfering process on the edge of the retaining head portion side of the aperture of the through hole that forms the air bleed path in the installation flange into which the rod portion of the jiggle valve is inserted, and the corners formed on the base end side of the retaining head portion may contact the tapered surface.

According to claim 3, a tapered surface may be formed by carrying out a chamfering process on both the edge of the retaining head portion side and the edge of the valve body side of the aperture of the through hole that forms the air bleed path in the installation flange into which the rod portion of the jiggle valve is inserted, and one tapered surface may contact the corners formed in the base end of the retaining head portion, and the other tapered surface may form the valve seat onto which the valve body is seated.

According to the present invention, the assembly operation of simply inserting the valve body of the jiggle valve formed integrally with the valve seat, the rod portion, and the retention head portion from an elastic material into the air bleed path provided in the installation flange of the on-off valve of the thermostat device can be carried out extremely simply. Furthermore, a small diameter step portion (cut out portion) is formed on the valve body periphery of the valve body, so the center of gravity moves from the small diameter step portion to the end portion, so it is possible to prevent movement of the valve body when cooling water is poured in and similar.

According to the thermostat device of the present invention as explained above, a small diameter step portion is formed on a part of the periphery of the cylindrical shaped valve body forming the jiggle valve, so thermal shrinkage and the like when forming the valve seat can be prevented thereby improving the formability, and a conical shaped seating portion of the valve seat can be smoothly formed, so a reliable seating condition can be obtained and the function of the jiggle valve can be achieved. In particular, in the valve body described above, the volume of the part with a spherical shaped taper surface (seal surface) in the conical shaped seating portion is large, and there is a danger of warping or the like in the cooling process during forming, but according to the present invention, the part adjoining the taper surface in the axial direction is formed as a small diameter step portion, so it is possible to make the overall volume almost the same, so the shape is stable, and as a result it is possible to form a good valve seat.

Furthermore, according to the present invention, it is possible to move the center of gravity of the towards the end portion of the valve body, so it is simple to maintain the valve open state when cooling water is poured in, and the operation of pouring in the water can be easily carried out.

Also, according to the present invention, the elastic deformation of the retaining head can be carried out extremely simply due to the action of the dividing slot, so the head portion and the rod portion can be simply inserted into the air bleed path, so the assembly operation can be carried out extremely simply.

Furthermore, according to the present invention, a tapered surface is formed on the edge of the aperture of the through hole that forms the air bleed path on the retaining head portion side by carrying out a chamfering process, so the corner portion of the base end of the retaining head portion contacts the tapered surface, so the head portion can always be maintained in an attitude that is perpendicular to the installation flange 12a, and in this way the retaining effect can be achieved.

Also, according to the present invention, the same tapered surface is formed by carrying out a chamfering process on both the edge of the retaining head portion side and the valve body side of the aperture of the through hole that forms the air bleed path in the installation flange into which the rod portion of the jiggle valve is inserted, and one tapered surface contacts the corners formed in the base end of the retaining head portion, and the other tapered surface forms the valve seat onto which the valve body is seated, so processing of the installation flange can be simply and reliably carried out, which is advantageous from the cost point of view, and has the advantage that the flange can be made from a conventional metal material, and so on.

### BRIEF DESCRIPTION OF THE DRAWINGS

Fig. 1 is a cross-sectional view showing the detail of the jiggle valve which is an important part of the first embodiment of the thermostat device according to the present invention;
Fig. 2 is an schematic outline isometric view showing the valve body of the jiggle valve of Fig. 1; and
Fig. 3 is a schematic cross-sectional view showing the thermostat device to which the present invention has been applied and the state of installation in the engine cooling water path.

### BEST MODE FOR CARRYING OUT THE INVENTION

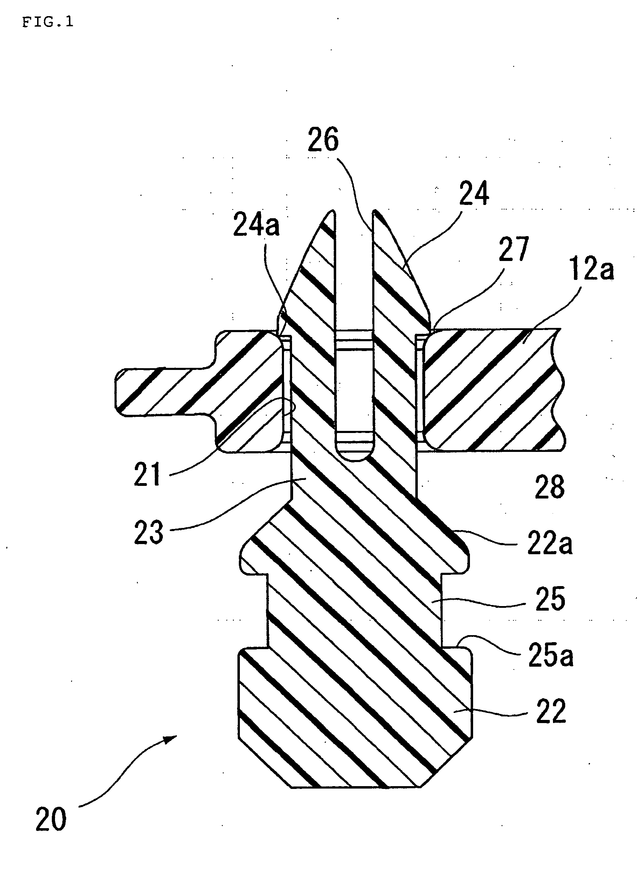

Figs. 1 through 3 show an embodiment of the thermostat device according to the present invention. Here, the present embodiment is explained for the case where it is provided and arranged on the engine inlet side of the engine cooling water system, and used to control the temperature of the cooling water.

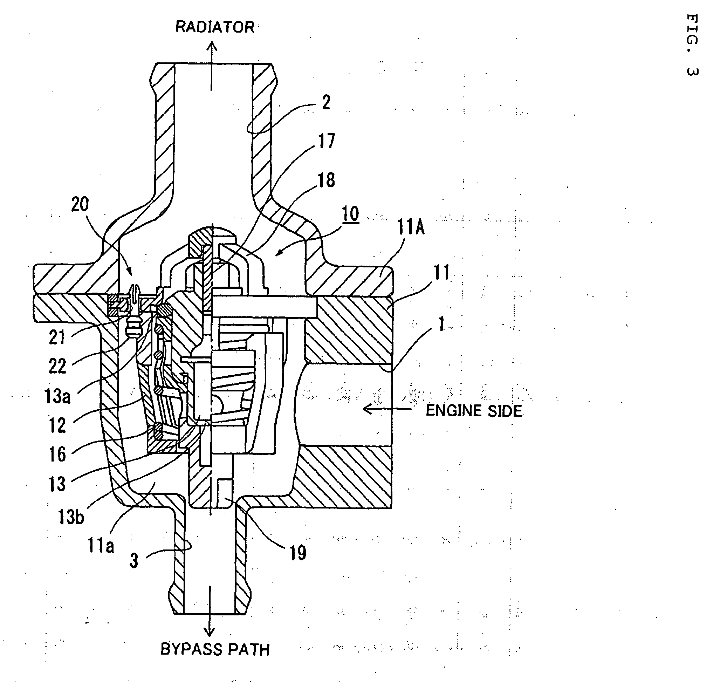

In Fig. 3, reference numeral 10 is the thermostat device, configured to control the opening and closing of the cooling water path between the engine side (water jacket outlet side), which is not shown in the drawings, and the bypass path, and also the radiator, in accordance with the cooling water temperature. Here, in the figure, 1 is the cooling water path from the engine side, 2 is the cooling water path to the radiator, and 3 is the cooling water path to the bypass path that returns to the engine without going through the radiator.

Therefore, the thermostat device 10 is provided so as to be capable of switching between a state in which the path to the radiator 2 is shut off and cooling water is distributed and circulated from the path from the engine side 1 to the path to the bypass side 3, and a state in which cooling water is distributed and circulated from the path from the engine side 1 to the path to the radiator side 2, in accordance with the cooling water temperature.

It is desirable that the location that this type of thermostat 10 is installed is near to the engine head of the engine. This is because by doing so, the thermostat device 10 can be controlled at a temperature that is close to the actual temperature of the engine.

Here as shown in Fig. 3, the thermostat 10 as described above includes a housing 11 (hereafter referred to as the housing 11 including the lid 11A) having cooling water paths 1, 2, a temperature sensitive case 13 disposed so that the case 13 can move within the paths 1, 2 and whose lower end is made to approach a water chamber 11a formed in the housing 11 that leads to the path to the bypass path 3, and wax 15 provided within the temperature sensitive case 13 as a thermally expanding material that can cause the temperature sensitive case 13 to slide in accordance with expansion and contraction accompanying the temperature fluctuations of the cooling water. When the wax 15 shrinks the path 1 is closed, also when the wax 15 expands the rising paths 1, 2 are made to communicate and cooling water is distributed and circulated to the side of a radiator 4.

Also, the thermostat 10 includes a main frame 12 disposed in a vertical direction within the housing 11 midway in the cooling water path 1, 2 which is the main path, fixed and held to the inside wall of the housing 11 by an installation flange 12a, the temperature sensitive case 13 held so that the case 13 can freely slide relative to the main frame 12 and having a valve body 13a that opens and closes a central opening in the installation flange 12a, and a spring 16 arranged between the frame 12 and the valve body 13a that maintains the valve body 13a in a position that the valve is always closed.

Wax (not shown in the drawings) is contained within the temperature sensitive case 13, so that the valve body 13a is made to open and close in accordance with the thermal expansion and thermal contraction of the wax. The details are commonly known, so a specific explanation is omitted. In one end of the temperature sensitive case 13 a piston rod 17 is provided that moves in accordance with the volumetric changes accompanying the thermal expansion and thermal contraction of the wax. In the figure, 18 is a locking frame provided integrally with the temperature sensitive case 13.

Also, in the thermostat device 10, when the wax in the temperature sensitive case 13 thermally expands, as the piston 17 moves a second valve body 19 on the tip of a projection 13b that projects towards the bypass path 7 side is moved to close the path 3 to the bypass path side. Therefore, cooling water from the engine side does not flow to the bypass path side, but flows to the radiator side through the first valve body.

In the thermostat 10 as described above, a through hole 21 is formed as an air bleed path in part of the flange 12a that is held and fixed to the housing side 11, and a jiggle valve 20 is provided that opens and closes the through hole 21.

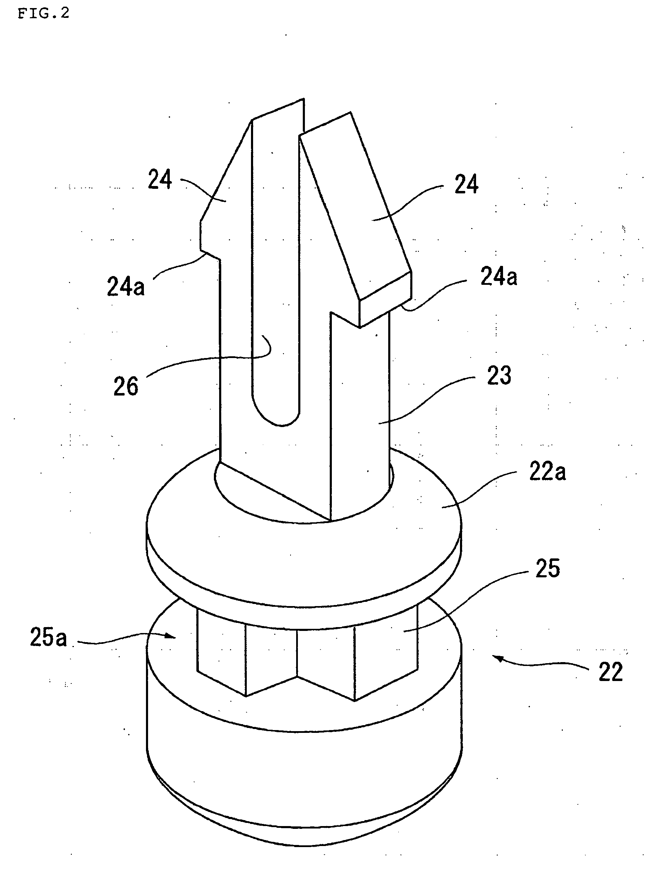

As shown in detail in Figs. 1 and 2, the jiggle valve 20 has a valve body 22 that opens and closes the air bleed path (hereafter referred to as 21) provided in the installation flange 12a of the on-off valve that forms the thermostat device 10 and that closes the air bleed path 21 which is provided in parallel with the on-off valve when the water pressure of the cooling water is applied. The valve body 22 of the jiggle valve 20 is formed from a cylindrical shape whose diameter is larger than that of the air bleed path 21 made from an elastic material such as for example a synthetic resin, formed integrally with a rod portion 23 that is inserted into the air bleed path 21 and a retaining head portion 24 provided on the end of the rod portion 23.

At the end of the cylindrical shaped valve body 22 on the side of the rod portion 23, a conical shaped seating portion 22a is formed with a spherical shaped taper surface forming the seal surface of the seating portion 22a. Also, a cutout portion 25 is formed in a part of the periphery in the axial direction of the cylindrical shaped valve body 22 near the seating portion 22a as a step with a diameter smaller than the periphery, uniformly forming a depression portion 25a along the circumferential direction. Here, the cutout portion 25 is formed having a cross-sectional shape that is in the form of a cross. This is to prevent thermal shrinkage after forming during the forming process of the valve seat 22, and to ensure that if thermal shrinkage occurs the shrinkage will be uniform, and the cross-sectional shape has the same volume in each direction in the circumferential direction, so the shape is such that removal from a metal mold is easy.

In other words, in the valve body 22 described above, the volume of the part with the taper surface (seal surface) in the conical shaped seating portion 22a is large, and there is a danger of warping or the like in the cooling process during forming, but as described above, the part adjoining the taper surface in the axial direction is uniformly formed as a cutout 25 in the circumferential direction, so it is possible to make the overall volume almost the same, so the shape is stable, and as a result it is possible to form a good valve seat from the point of view of sealing capability.

Also, the valve body 22 is formed integrally with the rod portion 23 projecting in the axial direction from the seating portion 22a is formed as a plate shaped rod, on the tip of which a wedge shaped retaining head portion 24. Furthermore, a dividing slot 26 is formed from the tip of the retaining head portion 24 in the axial direction. The dividing slot 26 is to allow the wedge shaped portion of the head portion 24 to deform elastically when the retaining head portion 24 and the rod portion 23 are inserted into the air bleed path 21.

Also, the gap between the rod portion 23 shaped in this way and the through hole 21 and the dividing slot 26 function as the air bleed path when the jiggle valve 20 is open, as shown in Figs. 1 and 2.

For example, polyphenylene sulfide (PPS) or another engineering plastic (synthetic resin) may be used as the elastic material for forming the valve body 22 as described above, but of course the material is not limited to this.

On the other hand, in the air bleed path of the installation flange 12a in which the rod portion 23 of the jiggle valve 20 is inserted, the edge of the aperture of the through hole 21 that forms the path on the side of the retaining head 24 is chamfered to form a tapered surface that contacts the corners 24a of the base end of the retaining head portion 24.

Furthermore, the edge of the aperture of the through hole 21 of the installation flange 12a in opposition to this, the edge of the aperture on the side of the valve body 22 is also chamfered to form a tapered surface 27 with the same shape. This tapered surface 28 forms the valve seat on which the seating portion 22a of the valve body 22 is seated.

According to this configuration, the assembly operation of simply inserting the valve body 22 of the jiggle valve 20 formed integrally with the valve body portion 22a, the rod portion 23, and the retention head portion 24 from an elastic material into the air bleed path 21 provided in the installation flange 12a of the on-off valve of the thermostat device 10 can be carried out extremely simply. Moreover, the cutout portion 25 is formed in the valve body periphery of the valve body 22, which has the advantage that the center of gravity moves to the end portion, so movement of the valve seat 22 when cooling water is poured in is prevented, so the operation of pouring in water can be easily carried out.

In the thermostat device 10 according to the configuration described above, the cutout portion 25 in which a part of the periphery in the axial direction of the cylindrical shaped valve body 22 that forms the jiggle valve is uniformly cut out in the circumferential direction, so thermal shrinkage and the like when forming the valve body 22 can be prevented thereby improving the formability, and the conical shape of the seating portion 22a of the valve seat 22 can be smoothly formed, so a reliable seating condition can be obtained and the function of the jiggle valve 20 achieved.

In particular, in the valve body 22 described above, the volume of the part with the taper surface (seal surface) in the conical shaped seating portion 22a is large, and there is a danger of warping or the like in the cooling process during forming, but according to the configuration described above, the part adjoining the taper surface in the axial direction is formed as a cutout 25, so it is possible to make the overall volume almost the same, so the shape is stable, and as a result it is possible to form a good valve seat. Therefore, it is possible to obtain the appropriate opening and closing state of the jiggle valve 20.

Also, in the thermostat device 10 described above, the part adjoining the seating portion 22a of the valve body 22 is formed as a cutout portion 25 with a cross shaped cross-section, so the overall volume can be made smaller compared with a small diameter portion simple circular cross-section, which has the advantage that filling with resin during forming and removing the formed product from the mold can be easily carried out. However, the present invention is not limited to this, and a step portion with a smaller diameter than the periphery of the valve body, for example the cutout portion 25 having the shape obtained by forming a depression uniformly in the circumferential direction may be used, and suitably shaped cross-sections can be considered.

Also, in the configuration described above, the elastic deformation of the retaining head 24 can be carried out extremely simply due to the action of the dividing slot 26, so the head portion 23 and the rod portion 14 can be simply inserted into the air bleed path 21, so the assembly operation can be carried out extremely simply.

Furthermore, a tapered surface is formed on the edge of the aperture of the through hole 21 that forms the air bleed path on the retaining head 24 side by carrying out a chamfering process, so the corners 24a of the base end of the retaining head portion 24 contact the tapered surface 27, so the head portion 24 can be always maintained in an attitude that is perpendicular to the installation flange 12a, and in this way the retaining effect can be achieved.

Also, in the above configuration a tapered surface is formed on the edge of the aperture of the through hole 21 that forms the air bleed path on the valve body 22 side by carrying out a chamfering process, so the tapered surface 28 forms a seat on which the valve body 22 is seated, so processing of the installation flange 12a can be simply and reliably carried out, which is advantageous from the cost point of view, and has the advantage that the flange 12a can be made from a conventional metal material and so on.

The present invention is not limited to the structure explained in the embodiment described above, and the shape, structure, and so on of each part that constitutes the thermostat device 10 can be appropriately modified and changed.

For example, in the embodiment described above, an example has been shown in which the rod portion 23 projecting from the seating portion 22a in the valve body 22 is formed in a plate shape, the retaining head 24 is formed in a wedge shape, and the dividing slot 26 is formed in the axial direction from the tip of the retaining head 24, but the present invention is not limited to this, and appropriate modified examples can be considered. For example, the shape may be a cylindrical shaped rod portion on the end of which a retaining head portion is provided for retention, in the tip of which one or a plurality of dividing slots are be formed.

Also, in the embodiment described above, a detailed explanation of the engine cooling circuit to which the thermostat device 10 is applied was omitted, but needless to say the present invention may be applied to a conventional commonly known engine cooling circuit.

## Claims

1. A thermostat device (10) provided in the cooling water circuit of an internal combustion engine, having a piston rod (17) that slides in accordance with thermal expansion and contraction of a thermally expanding material due to temperature fluctuations in the cooling water, an on-off valve whose valve body (13a) is opened and closed by the sliding of the piston rod (17) caused by volumetric changes in the thermally expanding material, and a jiggle valve (20) that opens and closes an air bleed path (21) provided in an installation flange of the on-off valve, the jiggle valve being provided in parallel with the on-off valve and having a valve body that closes the air bleed path under the water pressure of the cooling water, wherein
the valve body (22) of the jiggle valve (20) is formed in a cylindrical shape made from an elastic material whose diameter is larger than the air bleed path (21),
the jiggle valve (20) further comprises a rod portion (23) to be inserted into the air bleed path (21) and a retaining head portion (24) provided on the end of the rod portion (23),
a cutout portion (25) is formed in a part of the periphery in the axial direction of the cylindrical shaped valve body (22), said cutout portion being a step portion (25, 25a) whose diameter is smaller than the periphery, and
the rod portion (23) and the retaining head portion (24) are formed integrally from an elastic material with the valve body (22) of the jiggle valve (20), and a dividing slot (26) is formed from tip of the retaining head portion (24) along the axial direction.

2. The thermostat device according to claim 1, wherein
a tapered surface (27) is formed by carrying out a chamfering process on an edge of the retaining head portion (24) side of the aperture of the through hole that forms the air bleed path (21) in the installation flange (12a) into which the rod portion (23) of the jiggle valve (20) is inserted, and
corners (24a) formed on a base end side of the retaining head portion (24) contact the tapered surface (27).

3. The thermostat device according to claim 1, wherein
a tapered surface (27, 28) is formed by carrying out a chamfering process on both the edge of the retaining head portion (24) side and the edge of the valve body (22) side of the aperture of the through hole that forms the air bleed path (21) in the installation flange (12a) into which the rod portion (23) of the jiggle valve (20) is inserted, and
one tapered surface (27) contacts the corners (24a) formed in the base end of the retaining head portion (24), and the other tapered surface (28) forms the valve seat onto which a valve body (22) is seated.

## Patentansprüche

1. Thermostatvorrichtung (10) im Kühlwasserkreislauf einer internen Brennkraftmaschine, mit einer Kolbenstange (17), die sich entsprechend der thermischen Expansion und Kontraktion eines thermisch expandierenden Materials infolge von Temperaturschwankungen im Kühlwasser bewegt, einem Auf/Zu-Ventil, dessen Ventilkörper (13a) durch die Bewegung der Kolbenstange (17), die durch Volumenänderungen im thermisch expandierenden Material verursacht wird, geöffnet und geschlossen wird, und einem Jiggle-Ventil (20), das einen Entlüftungspfad (21) öffnet und schließt, der in einem Installationsflansch des Auf/Zu-Ventils vorgesehen ist, wobei das Jiggle-Ventil parallel zum Auf/Zu-Ventil vorgesehen ist und einen Ventilkörper hat, der den Entlüftungspfad unter dem Wasserdruck des Kühlwassers schließt, wobei
der Ventilkörper (22) des Jiggle-Ventils (20) in eine aus elastischem Material gemachte zylindrische Gestalt geformt ist, deren Durchmesser größer ist als der Entlüftungspfad (21),
das Jiggle-Ventil (20) ferner einen in den Entlüftungspfad (21) einzusetzenden Stangenabschnitt (23) und einen am Ende des Stangenabschnittes (23) vorgesehenen Rückhaltekopfabschnitt (24) aufweist,
in einem Teil der Peripherie des zylindrisch geformten Ventilkörpers (22) in axialer Richtung ein Ausschnittsabschnitt (25) gebildet ist, wobei der Ausschnittsabschnitt ein Stufenabschnitt (25, 25a) ist, dessen Durchmesser kleiner ist als die Peripherie, und
der Stangenabschnitt (23) und der Rückhaltekopfabschnitt (24) und der Ventilkörper (22) des Jiggle-Ventils (20) einstückig aus einem elastischen Material gebildet sind, und von der Spitze des Rückhaltekopfabschnittes (24) entlang der axialen Richtung ein Teilungsschlitz (26) gebildet ist.

2. Die Thermostatvorrichtung nach Anspruch 1, wobei
durch Ausführen eines Abschrägungsprozesses an einer Kante der Rückhaltekopfabschnitt (24) - Seite der Öffnung der Durchgangsbohrung, die den Entlüftungspfad (21) im Installationsflansch (12a) bildet, in welchen der Stangenabschnitt (23) des Jiggle-Ventils (20) eingesetzt wird, eine abgeschrägte Oberfläche (27) gebildet ist, und
an einer Basisendseite des Rückhaltekopfabschnittes (24) gebildete Kanten (24a) in Kontakt mit der abgeschrägten Oberfläche (27) sind.

3. Die Thermostatvorrichtung nach Anspruch 1, wobei
durch Ausführen eines Abschrägungsprozesses sowohl an der Kante der Rückhaltekopfabschnitt (24) - Seite als auch an der Kante der Ventilkörper (22) - Seite der Öffnung der Durchgangsbohrung, die den Entlüftungspfad (21) im Installationsflansch (12a) bildet, in welchen der Stangenabschnitt (23) des Jiggle-Ventils (20) eingesetzt wird, eine abgeschrägte Oberfläche (27, 28) gebildet ist, und
eine abgeschrägte Oberfläche (27) mit den am Basisende des Rückhaltekopfabschnittes (24) gebildeten Kanten (24a) in Kontakt ist, und die andere abgeschrägte Oberfläche (28) den Ventilsitz bildet, auf welchen der Ventilkörper (22) aufgesetzt wird.

## Revendications

1. Ensemble de thermostat (10) prévu dans le circuit d'eau de refroidissement d'un moteur à combustion interne et présentant
une tige de piston (17) qui coulisse selon la dilatation et la contraction thermique d'un matériau thermodilatable suite aux fluctuations de température de l'eau de refroidissement,
une soupape tout ou rien dont le corps de soupape (13a) est ouvert et fermé par le coulissement de la tige de piston (17) provoqué par les variations volumétriques du matériau thermodilatable et
une soupape (20) qui se déplace en va-et-vient et qui ouvre et ferme un passage (21) de purge d'air prévu dans une bride d'installation de la soupape tout ou rien,
la soupape se déplaçant en va-et-vient étant prévue en parallèle par rapport à la soupape tout ou rien et présentant un corps de soupape qui ferme le passage de purge d'air sous la pression hydraulique de l'eau de refroidissement,
le corps (22) de la soupape (20) se déplaçant en va-et-vient ayant une configuration cylindrique et étant formé d'un matériau élastique dont le diamètre est plus grand que celui du passage (21) de purge d'air,
la soupape (20) se déplaçant en va-et-vient comprenant de plus une partie (23) formant une tige destinée à être insérée dans le passage (21) de purge d'air et une partie (24) formant une tête de retenue prévue à l'extrémité de la partie (23) formant une tige,
une partie découpée (25) étant formée dans une partie de la périphérie dans la direction axiale du corps de soupape (22) de forme cylindrique, ladite partie découpée étant une partie (25, 25a) en gradin dont le diamètre est plus petit que celui de la périphérie et
la partie (23) formant une tige et la partie (24) formant une tête de retenue étant formées d'un matériau élastique et d'un seul tenant avec le corps (22) de la soupape (20) se déplaçant en va-et-vient, une fente de division (26) étant formée dans la direction axiale à partir du sommet de la partie (24) formant une tête de retenue.

2. Ensemble de thermostat selon la revendication 1, dans lequel une surface fuselée (27) est formée en réalisant une opération de chanfreinage d'un bord du côté de la partie (24) formant une tête de retenue de l'ouverture de la perforation qui forme le passage (21) de purge d'air dans la bride d'installation (12a) dans laquelle la partie formant une tige (23) de la soupape (20) se déplaçant en va-et-vient est insérée et des coins (24a) formés sur le côté d'extrémité de base de la partie (24) formant une tête de retenue étant en contact avec la surface fuselée (27).

3. Ensemble de thermostat selon la revendication 1, dans lequel une surface fuselée (27, 28) est formée en réalisant une opération de chanfreinage à la fois sur le bord du côté de la partie (24) formant une tête de retenue et sur le bord du côté du corps (22) de soupape de l'ouverture de la perforation qui forme le passage (21) de purge d'air dans la bride d'installation (12a) et dans laquelle la partie (23) formant une tige de la soupape (20) se déplaçant en va-et-vient est insérée et une surface fuselée (27) est en contact avec les coins (24a) formés dans l'extrémité de base de la partie (24) formant une tête de retenue, l'autre surface fuselée (28) formant le siège de soupape sur lequel un corps de soupape (22) est logé.
